# EUROPEAN PATENT SPECIFICATION

(11) **EP 3 726 330 B1**
(45) Date of publication and mention of the grant of the patent: **26.10.2022**
(21) Application number: 19170018.6
(22) Date of filing: 18.04.2019
(51) Int. Cl.: G05D 1/02, G05D 1/00, B60W 30/00, B60R 16/00, G06F 11/00

(54) **METHOD AND SYSTEM FOR FAIL-OPERATIONAL HANDOVER OF SERVICE DURING VEHICLE OPERATION**
VERFAHREN UND SYSTEM ZUR BETRIEBSSICHEREN ÜBERGABE EINES DIENSTES WÄHREND DES FAHRZEUGBETRIEBS
PROCÉDÉ ET SYSTÈME DE TRANSFERT DE SERVICE EN CAS DE PANNE PENDANT LE FONCTIONNEMENT D'UN VÉHICULE

(43) Date of publication of application: 21.10.2020
(73) Proprietor: Bayerische Motoren Werke Aktiengesellschaft, 80809 München (DE)
(72) Inventor: Oszwald, Florian, 80339 München (DE)

(56) References cited:
- US-A1- 2014 129 060
- US-A1- 2017 139 411
- US-B1- 9 195 232

## Description

The invention relates to a method for fail-operational service handover for vehicle operation, a system, a processing device, and a computer-readable medium for the same.

Autonomous Driving is one of the key E/E (electrical-electronic) architecture push factors in the automotive industry. The way towards autonomous driving is described in the SAE levels of the according norm SAE J3016 (trademark of SAE International). This norm describes six levels reaching from level zero to level five, where the latter contains the driver less driving or the fully automated driving.

In order for autonomous vehicles to operate safely where no human is required to take over in case of operation failure, the system driving the vehicle must be "fail-operational". The fail-operational requirement reflects the complex and varying environment the vehicle is operating in, and that merely shutting the vehicle off in case of failure (fail-safe in a narrow sense) is in many cases dangerous. Fail-operational can be defined as a system that is designed to be operational even in case of failure of a part of the system. Fail-operational can be used primarily in the context of safety-critical vehicle systems. The definition is however not limited to safety-critical systems, and may also be used in the context of less safety-critical systems, such as navigation systems or vehicle entertainment systems.

A fail-operational system may hand over from a primary (failing) part, to a secondary (fail-operational) part. A fail-operational part may be fully operational. In this case, the vehicle is fully operational in case of a failure in the primary part. In a fail-operational mode (operating on the fail-operational part), the system may also operational to a less extend and/or with less functionality. For safety-critical parts, this might involve at least functionality to a degree so that the system can safely bring the vehicle to halt at a safe location. An idea behind the "simplex architecture" is that the fail-operational part should be less complex and/or have fewer parts or instructions routines with fewer lines, and therefore be less likely to be failing. This allows a combination of the functionality of a complex system with the robustness of a simple system.

Fail-operational functions so far rely on structural redundancy. A parallel system take over the main system in case of failure of the main system. Structural redundancy requires pre-configured fail-operations behaviour and is therefore not flexible. An example of a fail-operational system for vehicle is disclosed in US 2014/129060 A1.

The invention includes realizing that structural redundancy may be replaced with dynamic redundancy. The invention further includes a solution for exchanging structural redundancy with dynamic redundancy in vehicle operation. The invention allows dynamic reconfiguration of redundant functions. The objective also includes minimizing the overall E/E-architecture and increasing the flexibility of fail-operational systems.

The object is solved by the subject-matter of the independent claims.

The fail-operational behaviour is based on a service-oriented architecture where service providers send (typically via broadcast or multicast) service offers over a data network. Service consumers may listen to broadcasted service offers and subscribe to services of interest. The service provider will usually only provide the offered service to the subscribing listeners (multicast). In case no consumer listens to a service, no data will necessarily be sent. In order to provide fail-operational behaviour using the service-oriented architecture, at least two service providers must be available offering the same service type; one primary, and one fail-operation (secondary).

By using a service-oriented approach, the structural redundancy may be replaced by dynamic redundancy allowing dynamic reconfiguration of safety crucial data communication. The functioning of a vehicle, such as SAE operation level, or the velocity limit of autonomous driving, may be adjusted to the number of redundant systems available.

The service provider may provide sensor information (such as velocity sensor), provide actuator ability (such as braking and steering), or computational capability (such as hardware accelerators or trajectory calculation). It may also provide less safety critical service, such as multimedia.

The priority of the service providers, i.e. which will be stored as fail-operation address, and which will be the preferred service provider, may be made predefined. It may also be decided depending on which service offer that is received first. It may also be made based on characteristics of the service provider, such as by determining information included in the service offer signals. It may also be decided based on the quality, granularity or speed of the service provided. A primary service provider may indicate itself as such in the service offer message, where any other service provider offering the same service type will be stored as secondary service provider (fail-operational).

Where the first service offer is determined to have lower priority than a later received service offer, the method may include stopping the subscription of the first received service provider, and storing the address of the first received service provider as fail-operational address, and sending a signal to the later received service offer address with a request to start subscribing to the later received service provider. Preferably, in order to reduce hand-over time. The second subscription is established before the subscription to the first service provider is cancelled to ensure continuous service.

The advantages further include that the second service provider may not necessary send data over the vehicle data network, where no subscription is made for the service, leading to lower overall network usage. Considering that substantial amount of dynamically redundant service providers may be present in a vehicle, in particular in autonomous vehicles, reducing redundant data traffic may be crucial for operation.

Service provider instructions/data may be received/sent using the same network as the network over which the service offer signal is received. The network may be an Ethernet based network. The data may also be sent over a separate logical of physical network, such as over a CAN or a FlexRay network. In one example, the vehicle includes redundant braking systems that offer a first and a second braking service respectively as service providers. The first and the second braking service provider may send signals over a first physical or logical network, such as an Ethernet and/or IP based network, identifying them as offering braking service. A vehicle control unit may receive the signals. The braking control unit may subscribe to the first and/or second service provider as described herein by sending a request over the same network. The actual braking instructions from the vehicle control unit may be sent over the same, or a separate physical or logical network, such as over a CAN or a FlexRay network. Real-time constrains may be facilitated by sending the braking instructions via a separate network.

In one embodiment, the determining in step g) is done by determining data and/or a keep-alive message is not received within a pre-described time interval and/or by sending a message to the first address requesting a status update and/or by receiving a message from the first address with a status update and/or by monitoring the data received from the first service provider.

The advantages of determining errors of faults using a time-interval include that determination may be possible also of failure external to the service provider, such as power and/or communication failure. The advantages of determining errors of faults by sending a message to the first address requesting a status update include that the time or frequency of determining can be decided on the service consumer side. The advantages of determining errors of faults by receiving a message from the first address with a status update include that a more detailed status level can be assessed, such as a particular quality of service. The advantages of determining errors of faults by monitoring the data received include that data may be compared with independent data providers to assess if the data is reliable.

In one embodiment, the first and/or the second signal are received complying to a SOME/IP (Scalable service-Oriented MiddlewarE over IP) protocol, preferably using Service Discovery (SOME/IP-SD) OfferService Entry, and/or the third and/or the fourth signal are sent according to the SOME/IP protocol, preferably using Service Discovery Subscribe Eventgroup Entry.

By using SOME/IP, in particular SOME/IP Service Discovery, in particular according to AUTOSAR SOME/IP Protocol Specification 1.0.0 or later, preferably AUTOSAR SOME/IP Protocol Specification 1.5.0 or later, a sender only sends data when at least one receiver in the network needs this data. The advantages include that the network is not loaded by unnecessary data. Further, several service consumer may subscribe to the same service provider and data may be multicasted only to those processes needing the data.

Data may be received from the first service provider using SOME/IP events or by other means over IP, over Ethernet, or over a separate network such as a CAN or FlexRay network.

In one embodiment, if the first service provider suffers an error and/or fault, the method further comprises:
iii) sending a signal to the first service address with a request to stop the subscription of the first service offer.

The advantages include that the first service provider will be informed that the service consumer does not use the first service provider any more. The first service provider may then stop sending data to the service consumer. If no other service consumers are listen to the first service provider, the first service provider may stop sending data on the network and even stop generation, leading to less unnecessary data on the network, less processing power utilized and less power consumption. On notification of a detected fault in the received data, the first service provider may initiate a recovery procedure, such as a restart or sensor/system clean, in an effort to increase the reliability of service. If the recovery procedure is successful, the first service provider may initiate a service offer broadcast on the network, informing potential service consumer that the service provider is available for subscription again.

In one embodiment, the method further comprising:
monitoring the second service provider, and in response to a change in the second service offer, updating or removing the second address as fail-operational address.

The advantages include a more flexible way to increase safety during vehicle operation. For safety-critical functions, at least two independent service providers (one redundant) should preferably be present at all time of operation. Where more than two service providers are present of a service type, the further may stop subscription without interfering with the fail-operational requirement of the system. In one example, a human, such as a back-up driver may be alerted in case the redundancy of the system fails, and the autonomous operation may continue with a human as a fail-operational "system". In one example, the full autonomous driving may be limited to certain areas or certain conditions, such as areas with particular road guidance systems, or conditions in good weather and/or visibility. In this case a service provider may indicate that it no longer providing a service outside the areas and/or conditions. A human ("fail-operational") driver may also be remote from the vehicle, such as controlling the vehicle via data link.

In one embodiment, the method further comprising:
receiving at least one further signal with a further service offer, the further signal including a further address, and a further identifier of a service type;
determining that the further identifier corresponds to the identifier of the desired service type; and
storing the further address as a further fail-operation address of the service type.

The advantages includes further safety of operation with one or more further service providers that may be used for fail-operation in case of failure in the first and the second service provider. In one example, the further service providers will only be subscribed to if the first and second service providers fails in order not to consume network bandwidth usage during normal operation.

The above-stated methods may further comprise features of the below-stated systems.

According to the invention, the vehicle comprises the first service provider and the second service provider.

Installing service providers as part of the vehicle allows communication over the vehicle network, facilitating compliance to real-time requirements. The service-oriented approach still allows components providing services to be uninstalled and/or replaced by other components providing the same service, at a late stage of manufacturing, or during garage service. Under certain condition, the components may even be "hot-swapped" during operation/transport.

A mix of remote and local service providers may also be used. The advantages include that a fail-operational service provider may be accessed over a network, external to the vehicle, such as via a wireless connection to the Internet. The remotely accessed service provider may have longer delay, and therefore be suitable for reduced vehicle functionality, but although operational and functional, such as at lower velocities. This may be the fail-operational service provider, while the full functional service provider is located in the vehicle with direct access to the vehicle internal communication network.

The remotely accessed service provider may also be providing increased functionality, such as by having accessed to more external data and/or more processing power, which may be needed for high speed operation. In this case, the service provider on the vehicle local data network may be the fail-operational service provider with reduced functionality.

In one embodiment, the system further comprises:
a further service provider
wherein the vehicle comprises the further service provider or the further service provider is remote of the vehicle.

The advantages include that additional redundancy may be provided. For some services, such as very safety critical services, the level of operation may depend on the number of redundant services, rather than on the quality of the services, such as that full vehicle velocity will only be available for example with a minimum of three independent service providers available. Two independent service providers will reduce functionality, such as velocity, and only one will initiate a function to safely bring the vehicle to halt in a safe location or require human to take over control.

The benefits and advantages of the computer readable medium and processing device are equal or similar to the advantages of the above-mentioned method and system.

In the following, embodiments of the invention are described with respect to the figures, wherein
- Fig. 1: shows a flowchart of sending and receiving signals according to an embodiment of the invention.
- Fig. 2: shows steps of a method of fail-operational service handover for vehicle operation according to an embodiment of the invention.
- Fig. 3: shows a system for fail-operational handover for vehicle operation according to an embodiment of the invention.

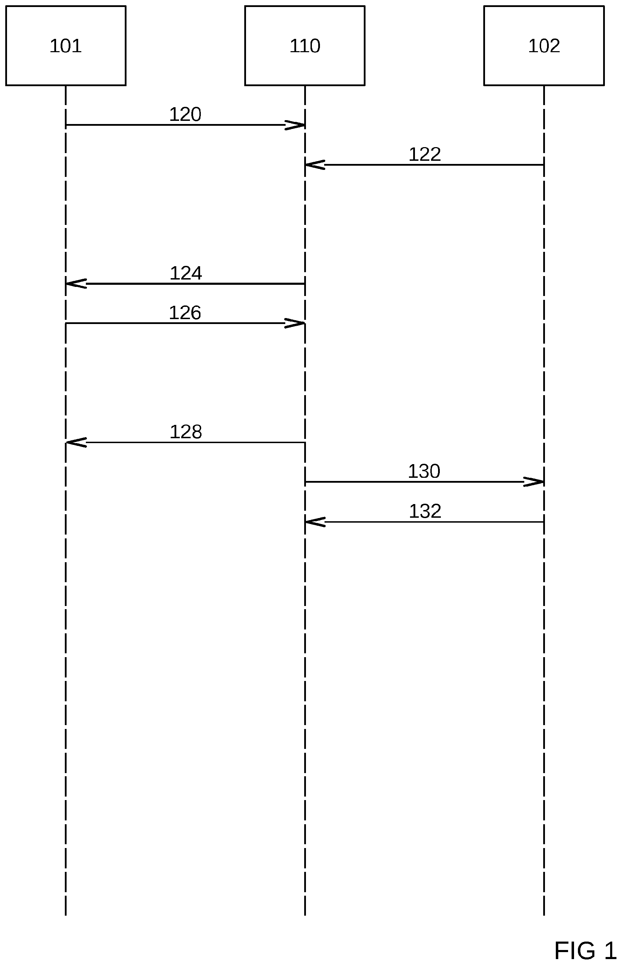

Fig. 1 shows a flowchart, including first service provider 101, a second service provider 102, and a service consumer 110. The first service provider 101 sends a first signal 120 with first service offer. The signal may be broadcasted on a network and received by the service consumer 110. The second service provider 102 sends a second signal 122 with second service offer. The signal may be broadcasted on a network and received by the service consumer 110. The service consumer 110 may determine that the first service provider and the second service provider both corresponds to a desired service type, such as by comparing identifiers carried by the first and the second signals. The service consumer 110 may also compare the identifiers with a pre-stored identifier of a desired service type. The service consumer may decide that the first service provider 101 is the preferred service provider. It may then store the address of the second service provider 102 as a fail- operational address. It may also send a third signal 124 to the first service provider 101 with subscription request. Data may now be received 126 from the first service provider 101 and the vehicle may be operated based on the data received.

If the service consumer determines that the first service provider suffers a fault and/or error, it may send a fourth signal 130 with subscription request to the second service provider and operating the vehicle at least partially based on a service in accordance with the second service offer. Optionally the service consumer may also send a signal 128 to the first service provider 101 to stop the subscription of the service.

Although the first service provider 101 is depicted as being the primary service provider, the first service provider 101 may also be the secondary service provider (fail-operational).

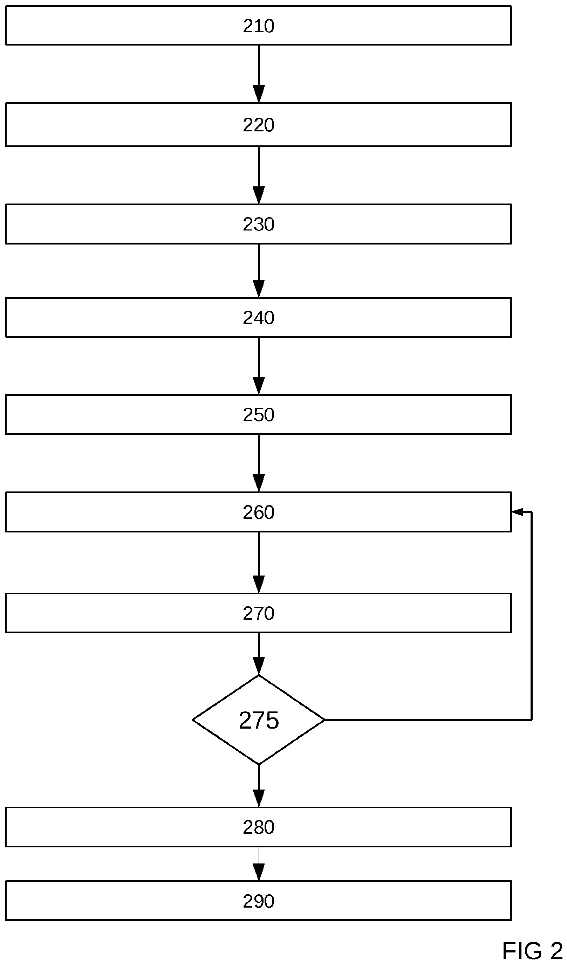

Fig. 2 shows steps of a method for fail-operational service handover for vehicle operation. The method may include receiving 210 a first signal with a first service offer, receiving 220 a second signal with a second service offer, determining 230 that the first and second identifier correspond to a desired service type, storing 240 the second address as fail-operational, sending 250 signal to the first address with a request to subscribe, operating 260 the vehicle at least partially based on a service in accordance with the first service offer, and determining 270 if the first service provider suffers an error and/or fault. A decision 275 is made based on determining. If the first service offer suffer from a fault or error or is unreliable for other reasons, the method will send 280 a signal to the (fail-operational) second address with a request to subscribe, and further 290 operate the vehicle based on data received from second service provider. If not, the vehicle will continue to be operated based on data received from the first service provider.

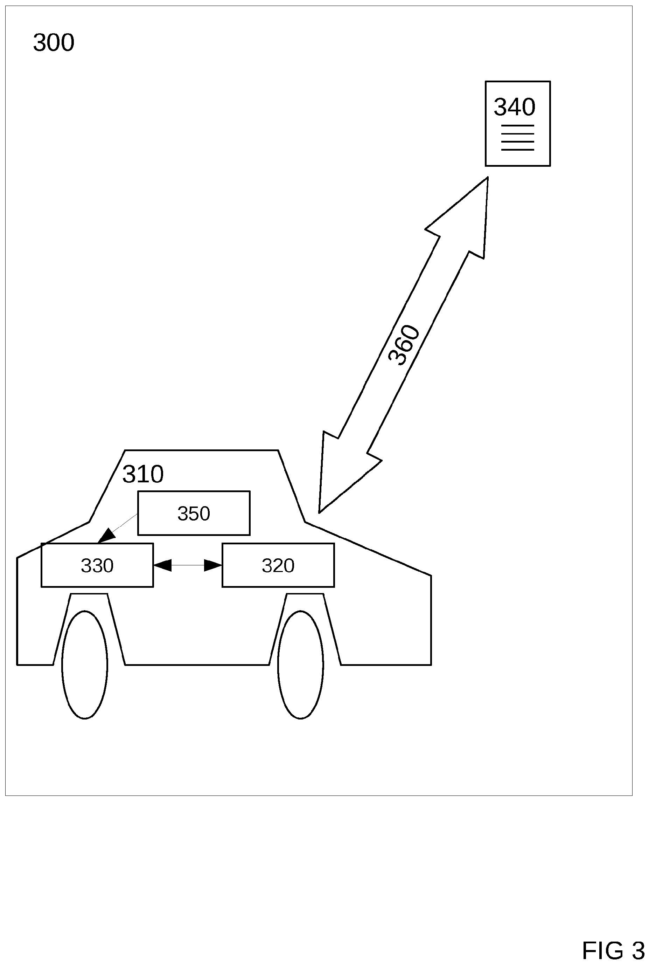

Fig. 3 shows a system 300 for fail-operational service handover for vehicle operation. The system includes a vehicle 310, a service consumer 320, a first service provider 330, a second service provider 340, and a communication channel 360. The service consumer 320 operates the vehicle based on data received from the first service provider 330 or the second service provider 340. Fig. 3 shows the first service provider 330 located in the vehicle 310, and the second service provider 340 located remote of the vehicle 310. This is only an example and both service providers may be located in the vehicle or remote or any mix thereof. The system may also be extended to further service providers. The communication channel 360 may be initiated over a network connecting the service consumer 320 with the second service provider 340. The first service provider 330 may be connected to the service consumer 320 via a vehicle data network.

In one example, the first service provider 330 may be an ECU (electronic control unit) calculating vehicle trajectory for safely driving the vehicle 310 on a street. The service consumer 320 may be another ECU steering the vehicle, such as via controlling servos adjusting the direction of the front wheels. The service consumer 320 may be programmed to adjust the front wheel direction based on a signal indicating a target wheel direction.

The first service provider may broadcast a signal with service offer on the vehicle data network, the signal including an identifier of a service type of providing steering directions. The service consumer 320 may listen on the network, identifying the service offer and subscribe to the first service provider. The vehicle will be steered based on data received by the service consumer 320 from the first service provider 330.

The second service provider 340 may be a cloud based vehicle guidance algorithm, that based on data received from the vehicle 310, road cameras (not shown), other vehicles (not shown) etc., may provide steering instructions to the vehicle 310. The second service provider 340 may multicast service offer on the Internet, received by the vehicle 310. When the second service 340 provider is available and sends a service offer to the vehicle 310, the vehicle 310 may store an address of the second service offer as a fail-operational address. In case the first service provider 330 fails, the service consumer 320 may subscribe to the second service provider 340. The vehicle 310 may not be steered based on steering directions receive from the second service provider 340.

In another example, the service consumer 320 is a vehicle sound system. The first service provider 330 may be a radio unit receiving radio channels via AM/FM bands. The second service provider 340 may be an Internet server providing radio channels over Internet. In order to reduce network usage, the first service provider 330 may be chosen to be the primary service provider. In case the reception of the radio is reduced, such as by entering a tunnel, the service consumer 320 may determine that the received radio signals are below a certain quality threshold. The service consumer 320 may then send a signal to the second service provider 340 with a request to start a subscription. The service consumer may also send a signal to the first service provider 330 indicating that it stop the subscription. The first service provider 330 may not stop sending sound data over the vehicle local data network. The first service provider 330 may also close down certain parts in order to reduce power consumption.

### Reference numerals

- 101: first service provider
- 102: second service provider
- 110: service consumer
- 120: first signal with first service offer
- 122: second signal with second service offer
- 124: third signal with subscription request
- 126: vehicle operation data from first service provider
- 128: (Optional) signal to stop subscription
- 130: fourth signal with subscription request
- 132: vehicle operation data from second service provider
- 210: receiving a first signal with a first service offer
- 220: receiving a second signal with a second service offer
- 230: determining that the first and second identifier correspond to a desired service type
- 240: storing the second address as a fail-operational
- 250: sending signal to the first address with a request to subscribe
- 260: operating the vehicle based on a first service
- 270: determining if the first service provider suffers an error and/or fault
- 275: decision based on determining
- 280: sending signal to the second address with a request to subscribe
- 290: operating the vehicle based on a second service
- 300: system for fail-operational service handover
- 310: vehicle
- 320: service consumer
- 330: first service provider
- 340: second service provider
- 350: Failure detection unit
- 360: communication channel

## Claims

1. A computer-implemented method for fail-operational service handover for a vehicle (310) operation, **characterized by** the method comprising the steps:
a) receiving a first signal (120) with a first service offer from a first service provider of the vehicle, the first signal including a first address, and a first identifier of a first service type;
b) receiving a second signal (122) with a second service offer from a second service provider of the vehicle, the second signal including a second address, and a second identifier of a second service type;
c) determining that the first identifier and the second identifier correspond to an identifier of a desired service type;
d) storing the second address as a fail-operational address of the desired service type;
e) sending a third signal (124) to the first address with a request to subscribe to the first service offer;
f) operating the vehicle at least partially based on a service in accordance with the first service offer from the first service provider; and
g) determining if the first service provider suffers an error and/or fault, and if so:
i) send a fourth signal (130) to the second address with a request to subscribe to the second service offer, and
ii) operating the vehicle at least partially based on a service in accordance with the second service offer from the second service provider.

2. The method of claim 1,
wherein the determining in step g) is done by determining that data and/or a keep-alive message is not received within a pre-described time interval and/or by sending a message to the first address requesting a status update and/or by receiving a message from the first address with a status update and/or by monitoring the data received from the first service provider.

3. The method of claims 1 or 2,
wherein the first and/or the second signal are received complying to a SOME/IP protocol, preferably using Service Discovery OfferService Entry, and/or the third and/or the fourth signal are sent according to the SOME/IP protocol, preferably using Service Discovery Subscribe Eventgroup Entry.

4. The method of any of the claims 1 to 3,
wherein, if the first service provider suffers an error and/or fault, the method further comprises:
iii) sending a signal (128) to the first service address with a request to stop the subscription of the first service offer.

5. The method of any of the claims 1 to 4, the method further comprising:
monitoring the second service provider, and in response to a change in the second service offer, updating or removing the second address as fail-operational address.

6. The method of any of the claims 1 to 5, the method further comprising:
receiving at least one further signal (120) with a further service offer, the further signal including a further address, and a further identifier of a service type;
determining that the further identifier corresponds to the identifier of the desired service type; and
storing the further address as a further fail-operation address of the service type.

7. A system (300) for fail-operational service handover for vehicle operation, in particular a system comprises means for carrying out the steps of the method of one of the claims 1 to 6, **characterized by** the system comprising:
a vehicle (310), the vehicle (310) comprising a computer-implemented service consumer (320) for operating the vehicle (310);
a first service provider (330);
a second service provider (340);
a failure detection device (350); and
a data communication network (360), the data communication network (360) connecting the first service provider (330) and the second service provider (340) with the service consumer (320),
wherein the system (320) comprises means for carrying out the steps:
a) receiving, at the service consumer (320), a first signal (120) with a first service offer from the first service provider (330), the first signal including a first address, and a first identifier of a first service type;
b) receiving, at the service consumer (320), a second signal (122) with a second service offer from the second service provider (340), the second signal including a second address, and a second identifier of a second service type;
c) determining that the first identifier and the second identifier correspond to an identifier of a desired service type;
d) storing the second address as a fail-operational address of the desired service type;
e) sending a third signal (124) to the first service provider (330) with a request to subscribe to the first service offer from the first service provider (330);
f) operating the vehicle at least partially based on a service in accordance with the first service offer from the first service provider (330); and
g) determining, by the failure detection device (350), if the first service provider (330) suffers an error and/or fault, and if so:
i) send a fourth signal (130) to the second service provider (340) with a request to subscribe to the second service offer from the second service provider (340), and
ii) operating the vehicle at least partially based on a service in accordance with the second service offer from the second service provider (340);
wherein the vehicle comprises the first service provider and/or the second service.

8. The system of any of the claim 7,
the system further comprising:
a further service provider
wherein the vehicle comprises the further service provider or the further service provider is remote of the vehicle.

9. A processing device **characterized by** comprising means for carrying out the method of any of the claims 1 to 6.

10. A computer-readable medium **characterized by** comprising instructions which, when executed by a processor, cause the processor to carry out the steps of the method of any of the claims 1 to 6.

## Patentansprüche

1. Computerimplementiertes Verfahren für eine bei einem Ausfall betriebsfähige Dienstübergabe für den Betrieb eines Fahrzeugs (310), **gekennzeichnet durch** das Verfahren, das die folgenden Schritte umfasst:
a) Empfangen eines ersten Signals (120) mit einem ersten Dienstangebot von einem ersten Diensteanbieter des Fahrzeugs, wobei das erste Signal eine erste Adresse und eine erste Kennung eines ersten Diensttyps enthält;
b) Empfangen eines zweiten Signals (122) mit einem zweiten Dienstangebot von einem zweiten Diensteanbieter des Fahrzeugs, wobei das zweite Signal eine zweite Adresse und eine zweite Kennung eines zweiten Diensttyps enthält;
c) Bestimmen, dass die erste Kennung und die zweite Kennung einer Kennung eines gewünschten Diensttyps entsprechen;
d) Speichern der zweiten Adresse als eine bei einem Ausfall betriebsfähige Adresse des gewünschten Diensttyps;
e) Senden eines dritten Signals (124) an die erste Adresse mit einer Anforderung, das erste Dienstangebot zu abonnieren;
f) Betreiben des Fahrzeugs wenigstens teilweise basierend auf einem Dienst gemäß dem ersten Dienstangebot von dem ersten Diensteanbieter; und
g) Bestimmen, ob der erste Dienstanbieter einen Fehler und/oder eine Störung erleidet, und falls ja:
i) Senden eines vierten Signals (130) an die zweite Adresse mit einer Anforderung, das zweite Dienstangebot zu abonnieren, und
ii) Betreiben des Fahrzeugs wenigstens teilweise basierend auf einem Dienst gemäß dem zweiten Dienstangebot von dem zweiten Dienstanbieter.

2. Verfahren nach Anspruch 1,
wobei das Bestimmen im Schritt g) durch das Bestimmen, dass innerhalb eines vorgeschriebenen Zeitintervalls keine Daten und/oder keine Am-Lebenerhalte-Nachricht empfangen werden, und/oder durch das Senden einer Nachricht, die eine Statusaktualisierung anfordert, an die erste Adresse und/oder das Empfangen einer Nachricht mit einer Statusaktualisierung von der ersten Adresse und/oder durch das Überwachen der von dem ersten Diensteanbieter empfangenen Daten ausgeführt wird.

3. Verfahren nach den Ansprüchen 1 oder 2,
wobei das erste und/oder das zweite Signal gemäß einem SOME/IP-Protokoll, vorzugsweise unter Verwendung eines "Service Discovery OfferService"-Eintrags empfangen werden und/oder das dritte und/oder das vierte Signal gemäß dem SOME/IP-Protokoll, vorzugsweise unter Verwendung eines "Service Discovery Subscribe Eventgroup"-Eintrags gesendet werden.

4. Verfahren nach einem der Ansprüche 1 bis 3,
wobei dann, wenn der erste Diensteanbieter einen Fehler und/oder eine Störung erleidet, das Verfahren ferner Folgendes umfasst:
iii) Senden eines Signals (128) an die erste Dienstadresse mit einer Anforderung, das Abonnement des ersten Dienstangebots zu stoppen.

5. Verfahren nach einem der Ansprüche 1 bis 4, wobei das Verfahren ferner Folgendes umfasst:
Überwachen des zweiten Diensteanbieters und in Reaktion auf eine Änderung des zweiten Dienstangebots Aktualisieren oder Entfernen der zweiten Adresse als eine bei einem Ausfall betriebsfähige Adresse.

6. Verfahren nach einem der Ansprüche 1 bis 5, wobei das Verfahren ferner Folgendes umfasst:
Empfangen wenigstens eines weiteren Signals (120) mit einem weiteren Dienstangebot, wobei das weitere Signal eine weitere Adresse und eine weitere Kennung eines Diensttyps enthält;
Bestimmen, dass die weitere Kennung der Kennung des gewünschten Diensttyps entspricht; und
Speichern der weiteren Adresse als eine weitere bei einem Ausfall betriebsfähige Adresse des Diensttyps.

7. System (300) für eine bei einem Ausfall betriebsfähige Dienstübergabe für den Fahrzeugbetrieb, insbesondere ein System, das Mittel zum Ausführen der Schritte des Verfahrens nach einem der Ansprüche 1 bis 6 umfasst, **gekennzeichnet durch** das System, das Folgendes umfasst:
ein Fahrzeug (310), wobei das Fahrzeug (310) einen computerimplementierten Dienstabnehmer (320) zum Betreiben des Fahrzeugs (310) umfasst;
einen ersten Diensteanbieter (330);
einen zweiten Diensteanbieter (340;
eine Störungsdetektionsvorrichtung (350); und
ein Datenkommunikationsnetz (360), wobei das Datenkommunikationsnetz (360) den ersten Diensteanbieter (330) und den zweiten Diensteanbieter (43) mit dem Dienstabnehmer (320) verbindet,
wobei das System (320) Mittel zum Ausführen der folgenden Schritte umfasst:
a) Empfangen, an dem Dienstabnehmer (320), eines ersten Signals (120) mit einem ersten Dienstangebot von einem ersten Diensteanbieter (330), wobei das erste Signal eine erste Adresse und eine erste Kennung eines ersten Diensttyps enthält;
b) Empfangen, an dem Dienstabnehmer (320), eines zweiten Signals (122) mit einem zweiten Dienstangebot von einem zweiten Diensteanbieter (340), wobei das zweite Signal eine zweite Adresse und eine zweite Kennung eines zweiten Diensttyps enthält;
c) Bestimmen, dass die erste Kennung und die zweite Kennung einer Kennung eines gewünschten Diensttyps entsprechen;
d) Speichern der zweiten Adresse als eine bei einem Ausfall betriebsfähige Adresse des gewünschten Diensttyps;
e) Senden eines dritten Signals (124) an den ersten Diensteanbieter (330) mit einer Anforderung, das erste Dienstangebot von dem ersten Diensteanbieter (330) zu abonnieren;
f) Betreiben des Fahrzeugs wenigstens teilweise basierend auf einem Dienst gemäß dem ersten Dienstangebot von dem ersten Diensteanbieter (330); und
g) Bestimmen, durch die Störungsdetektionsvorrichtung (350), ob der erste Dienstanbieter (330) einen Fehler und/oder eine Störung erleidet, und, falls ja:
i) Senden eines vierten Signals (130) an den zweiten Diensteanbieter (340) mit einer Anforderung, das zweite Dienstangebot von dem zweiten Diensteanbieter (340) zu abonnieren, und
ii) Betreiben des Fahrzeugs wenigstens teilweise basierend auf einem Dienst gemäß dem zweiten Dienstangebot von dem zweiten Dienstanbieter (340);
wobei das Fahrzeug den ersten Diensteanbieter und/oder den zweiten Dienst umfasst.

8. System nach Anspruch 7,
wobei das System ferner Folgendes umfasst:
einen weiteren Diensteanbieter,
wobei das Fahrzeug den weiteren Diensteanbieter umfasst oder sich der weitere Diensteanbieter entfernt von dem Fahrzeug befindet.

9. Verarbeitungsvorrichtung, **gekennzeichnet durch** das Umfassen von Mitteln zum Ausführen des Verfahrens nach einem der Ansprüche 1 bis 6.

10. Computerlesbares Medium, **gekennzeichnet durch** das Umfassen von Anweisungen, die, wenn sie durch einen Prozessor ausgeführt werden, den Prozessor veranlassen, die Schritte des Verfahrens nach einem der Ansprüche 1 bis 6 auszuführen.

## Revendications

1. Procédé mis en œuvre par ordinateur pour le transfert de service en cas de panne de fonctionnement pour le fonctionnement d'un véhicule (310), **caractérisé en ce que** le procédé comprend les étapes suivantes :
a) la réception d'un premier signal (120) avec une première offre de service en provenance d'un premier fournisseur de service du véhicule, le premier signal comportant une première adresse, et un premier identifiant d'un premier type de service ;
b) la réception d'un deuxième signal (122) avec une deuxième offre de service en provenance d'un deuxième fournisseur de service du véhicule, le deuxième signal comportant une deuxième adresse, et un deuxième identifiant d'un deuxième type de service ;
c) la détermination du fait que le premier identifiant et le deuxième identifiant correspondent à un identifiant d'un type de service souhaité ;
d) le stockage de la deuxième adresse en tant qu'adresse de panne de fonctionnement du type de service souhaité ;
e) l'envoi d'un troisième signal (124) à la première adresse avec une demande de souscription à la première offre de service ;
f) le fonctionnement du véhicule au moins partiellement sur la base d'un service conforme à la première offre de service du premier fournisseur de service ; et
g) la détermination du fait de savoir si le premier fournisseur de service subit une erreur et/ou un défaut, et si c'est le cas :
i) l'envoi d'un quatrième signal (130) à la deuxième adresse avec une demande de souscription à la deuxième offre de service, et
ii) le fonctionnement du véhicule au moins partiellement sur la base d'un service conforme à la deuxième offre de service du deuxième fournisseur de service.

2. Procédé selon la revendication 1,
dans lequel la détermination de l'étape g) est effectuée en déterminant que des données et/ou un message de maintien en activité n'est pas reçu dans un intervalle de temps prescrit et/ou en envoyant un message à la première adresse demandant une mise à jour d'état et/ou en recevant un message en provenance de la première adresse avec une mise à jour d'état et/ou en surveillant les données reçues en provenance du premier fournisseur de service.

3. Procédé selon la revendication 1 ou 2,
dans lequel le premier et/ou le deuxième signal sont reçus en conformité avec un protocole SOME/IP, en utilisant de préférence Service Discovery OfferService Entry, et/ou le troisième et/ou le quatrième signal sont envoyés selon le protocole SOME/IP, en utilisant de préférence Service Discovery Subscribe Eventgroup Entry.

4. Procédé selon l'une quelconque des revendications 1 à 3,
dans lequel, si le premier fournisseur de service subit une erreur et/ou un défaut, le procédé comprend en outre : iii) l'envoi d'un signal (128) à la première adresse de service avec une demande de cessation de la souscription à la première offre de service.

5. Procédé selon l'une quelconque des revendications 1 à 4, le procédé comprenant en outre :
la surveillance du deuxième fournisseur de service, et en réponse à un changement de la deuxième offre de service, la mise à jour ou la suppression de la deuxième adresse en tant qu'adresse de panne de fonctionnement.

6. Procédé selon l'une quelconque des revendications 1 à 5, le procédé comprenant en outre :
la réception d'au moins un signal supplémentaire (120) avec une offre de service supplémentaire, le signal supplémentaire comportant une adresse supplémentaire, et
un identifiant supplémentaire d'un type de service ;
la détermination du fait que l'identifiant supplémentaire correspond à l'identifiant du type de service souhaité ; et
le stockage de l'adresse supplémentaire en tant qu'adresse de panne de fonctionnement supplémentaire du type de service.

7. Système (300) de transfert de service en cas de panne de fonctionnement pour le fonctionnement d'un véhicule, en particulier un système comprenant un moyen destiné à mettre en œuvre les étapes du procédé selon l'une des revendications 1 à 6, **caractérisé en ce que** le système comprend
un véhicule (310), le véhicule (310) comprenant un consommateur de service (320) mis en œuvre par ordinateur pour faire fonctionner le véhicule (310) ;
un premier fournisseur de service (330) ;
un deuxième fournisseur de service (340) ;
un dispositif de détection de panne (350) ; et
un réseau de communication de données (360), le réseau de communication de données (360) connectant le premier fournisseur de service (330) et le deuxième fournisseur de service (340) au consommateur de service (320),
dans lequel le système (320) comprend un moyen destiné à exécuter les étapes suivantes :
a) la réception, au niveau du consommateur de service (320), d'un premier signal (120) avec une première offre de service en provenance du premier fournisseur de service (330), le premier signal comprenant une première adresse, et un premier identifiant d'un premier type de service ;
b) la réception, au niveau du consommateur de service (320), d'un deuxième signal (122) avec une deuxième offre de service en provenance du deuxième fournisseur de service (340), le deuxième signal comportant une deuxième adresse, et un deuxième identifiant d'un deuxième type de service ;
c) la détermination du fait que le premier identifiant et le deuxième identifiant correspondent à un identifiant d'un type de service souhaité ;
d) le stockage de la deuxième adresse en tant qu'adresse de panne de fonctionnement du type de service souhaité ;
e) l'envoi d'un troisième signal (124) au premier fournisseur de service (330) avec une demande de souscription à la première offre de service du premier fournisseur de service (330) ;
f) le fonctionnement du véhicule au moins partiellement sur la base d'un service conforme à la première offre de service du premier fournisseur de service (330) ; et
g) la détermination, par le dispositif de détection de panne (350), du fait de savoir si le premier fournisseur de service (330) subit une erreur et/ou une panne, et si c'est le cas :
i) l'envoi d'un quatrième signal (130) au deuxième fournisseur de service (340) avec une demande de souscription à la deuxième offre de service provenant du deuxième fournisseur de service (340), et
ii) le fonctionnement du véhicule au moins partiellement sur la base d'un service conforme à la deuxième offre de service du deuxième fournisseur de service (340) ;
dans lequel le véhicule comprend le premier fournisseur de service et/ou le deuxième service.

8. Système selon la revendication 7,
le système comprenant en outre :
un fournisseur de service supplémentaire,
dans lequel le véhicule comprend le fournisseur de service supplémentaire ou le fournisseur de service supplémentaire est distant du véhicule.

9. Dispositif de traitement **caractérisé en ce qu'**il comprend un moyen destiné à mettre en œuvre le procédé selon l'une quelconque des revendications 1 à 6.

10. Support lisible par ordinateur **caractérisé en ce qu'**il comprend des instructions qui, lorsqu'elles sont exécutées par un processeur, amènent le processeur à mettre en œuvre les étapes du procédé selon l'une quelconque des revendications 1 à 6.
